# EUROPEAN PATENT SPECIFICATION

(11) **EP 4 079 407 B1**
(45) Date of publication and mention of the grant of the patent: **20.11.2024**
(21) Application number: 21169189.4
(22) Date of filing: 19.04.2021
(51) Int. Cl.: F16C 19/06, B04B 5/12, B04B 9/12, F01M 13/04, F16C 25/08, F16C 35/04

(54) **A CENTRIFUGAL SEPARATOR COMPRISING A BEARING HOLDER**
ZENTRIFUGALABSCHEIDER MIT EINEM LAGERHALTER
SÉPARATEUR CENTRIFUGE COMPORTANT UN SUPPORT DE PALIER

(43) Date of publication of application: 26.10.2022
(73) Proprietor: Alfdex AB, 261 24 Landskrona (SE)
(72) Inventor: JONSSON, Patrik, 14140 Huddinge (SE)
(74) Representative: Alfa Laval Attorneys

(56) References cited:
- WO-A1-94/16234
- US-A- 2 521 638
- US-B2- 8 657 908

## Description

### Field of the Invention

The present invention relates to the field of centrifugal separators for cleaning a gas containing liquid contaminants. In particular, the present invention relates to a separator for cleaning crankcase gases of a combustion engine from oil particles.

### Background of the Invention

It is well known that a mixture of fluids having different densities may be separated from one another through use of a centrifugal separator. One specific use of such a separator is in the separation of oil from gas vented from a crankcase forming part of an internal combustion engine.

With regard to this specific use of separators, there can be a tendency for the high-pressure gas found in the combustion chambers of an internal combustion engine to leak past the associated piston rings and into the crankcase of the engine. This continuous leaking of gas into the crankcase can lead to an undesirable increase of pressure within the crankcase and, as a consequence, to a need to vent gas from the casing. Such gas vented from the crankcase typically carries a quantity of engine oil (as droplets or a fine mist), which is picked up from the reservoir of oil held in the crankcase.

In order to allow vented gas to be introduced into the inlet system without also introducing unwanted oil (particularly into a turbocharging system wherein the efficiency of the compressor can be adversely affected by the presence of oil), it is necessary to clean the vented gas (i.e. to remove the oil carried by the gas) prior to the gas being introduced into the inlet system. This cleaning process may be undertaken by a centrifugal separator, which is mounted on or adjacent the crankcase and which directs cleaned gas to the inlet system and directs separated oil back to the crankcase. An example of such a separator is disclosed e.g. in US 8,657,908.

The bearings in a centrifugal separator as in US 8,657,908 are usually preloaded to achieve good function and increased bearing/system lifetime. A common way to do this is to have rigid bearing holder and to add a compression spring, e.g. arranged around the rotational shaft that supported by the bearing, to provide the axial pre-load of the bearing. However, there is a need for solutions that are less complex, i.e. with a reduced number of components, that would thus be easier to manufacture.

WO-A-94/16,214 discloses a method and apparatus for an axially displaced flexural bearing support having a unitary or monolithic bearing support member.

US-A-8,657,908 discloses a centrifugal separator for cleaning of a gas, such as gas vented from a crank case forming part of an internal combustion engine.

### Summary of the Invention

It is an object of the invention to at least partly overcome one or more limitations of the prior art. In particular, it is an object to provide a centrifugal separator with a reduced number of components for providing the axial pre-load of the bearings in a centrifugal separator for cleaning gas.

As a first aspect of the invention, there is provided a centrifugal separator for cleaning gas containing contaminants. The centrifugal separator is comprising
a stationary casing, enclosing a separation space through which a gas flow is permitted,
a gas inlet extending through the stationary casing and permitting supply of the gas to be cleaned,
a rotating member comprising a plurality of separation members arranged in said separation space and being arranged to rotate around an axis (X) of rotation, said rotating member being journaled within the stationary casing via at least one bearing retained in a bearing holder;
a gas outlet arranged in the stationary casing and configured to permit discharge of cleaned gas and comprising an outlet opening through a wall of the stationary casing,
a drainage outlet arranged in the stationary casing and configured to permit discharge of liquid contaminants separated from the gas to be cleaned;
a drive member for rotating the rotating member;
wherein said at least one bearing is mounted with an axial preload in said centrifugal separator, and
characterised in that
said at least one bearing holder is flexible when dismounted from said centrifugal separator and arranged in said centrifugal separator with a pre-tension to provide said axial preload of the at least one bearing.
and wherein, the bearing holder comprises a central portion supporting the bearing and at least two radial spokes extending from the central portion, and wherein a through opening formed between the radial spokes forms part of the gas inlet or the drainage outlet.

As used herein, the term "axially" denotes a direction which is parallel to the rotational axis (X). Accordingly, relative terms such as "above", "upper", "top", "below", "lower", and "bottom" refer to relative positions along the rotational axis (X). Correspondingly, the term "radially" denotes a direction extending radially from the rotational axis (X). A "radially inner position" thus refers to a position closer to the rotational axis (X) compared to "a radially outer position".

The contaminants in the gas may comprise liquid contaminants, such as oil, and soot.

Consequently, the centrifugal separator may be for separating liquid contaminants, such as oil, from gas. The gas may be crankcase gas of a combustion engine. However, the centrifugal separator may also be suitable for cleaning gases from other sources, for instance the environment of machine tools which frequently contains large amounts of liquid contaminants in the form of oil droplets or oil mist.

The stationary casing of the centrifugal separator may comprise a surrounding side wall, and first and second end walls, which enclose the separation space. The stationary casing may have a cylindrical shape with circular cross-section having a radius R from the axis (X) of rotation to the surrounding side wall. This radius R may be constant at least with respect to a major part of the circumference of the surrounding side wall. The first and second end walls may thus form an upper end wall and a lower end wall of the cylindrical shaped casing. The stationary casing may also be slightly conical.

The gas inlet of the centrifugal separator may be arranged through the first end wall or through the surrounding side wall close to the first end wall, thus at the top of the separator, such that gas entering through the gas inlet is directed to the separation space. The downstream portion of the gas inlet may be centred around the axis of rotation (X). The gas inlet may further comprise upstream portion in the form of an inlet conduit. This conduit may extend radially or axially from the centrifugal separator.

The drainage outlet is arranged in the lower portion of the stationary casing, such as arranged in the second end wall, e.g. at the bottom of the separator. Thus, the drainage outlet may be arranged centrally in an end wall opposite the end wall through which, or at which, the inlet is arranged. The drainage outlet of the centrifugal separator may further be formed by several spot shaped through holes of the stationary casing or by a single drainage passage. The drainage outlet may be arranged at the axis of rotation or centred around the axis of rotation. The drainage outlet may also be in an annular collection groove at the inner end wall of the stationary casing.

The gas outlet may be in the form of a gas conduit in through a wall of the stationary casing, such as in a lower portion of the surrounding side wall of the stationary casing. However, the gas outlet may also be arranged an upper portion of the stationary casing.

The rotating member is arranged for rotation during operation by means of the drive member. The rotating member comprises a plurality of separation members arranged in the separation space. The separation members of the rotating member are examples of surface-enlarging inserts that promote separation of contaminants from the gas. The separation members may be a stack of separation discs. The separation discs of the stack may be frustoconical. A frustoconical disc may have a planar portion extending in a plane that is perpendicular to the axis of rotation, and a frustoconical portion that may extend upwards or downwards. The planar portion may be closer to the rotational axis than the frustoconical portion. Further, the discs of the stack may be radial discs, in which substantially the whole disc extends in a plane that is perpendicular to the axis of rotation.

It is also to be understood that the separation members, such as separation discs, not necessarily have to be arranged in a stack. The separation space may for example comprise axial discs, or plates that extend around the axis of rotation. The axial discs or plates may be planar, i.e. extending in planes that are parallel to the axis of rotation. The axial discs or plates may also have a slightly or significantly curved shape, such as an arcuate or spiral shape, as seen in a radial plane.

The rotating member is journaled within the stationary casing by at least one bearing, such as by at least two bearings. Each of the bearings may be retained in an individual bearing holder.

During operation, gas to be cleaned may be directed centrally through the plurality of separation members, such as centrally through the stack of separation discs. In such a set-up, the rotating member may further define a central space formed by at least one through hole in each of the separation members. This central space is connected to the gas inlet and configured to convey the gas to be cleaned from the gas inlet to the interspaces between the separation members, such as between the interspaces between the discs of a stack of separation discs. A separation disc that may be used as separation member may comprise a central, essentially flat portion perpendicular to the axis of rotation. This portion may comprise the through holes that form parts of the central space.

Thus, the centrifugal separator may be configured to lead gas to be cleaned, such as crankcase gases, from the gas inlet into a central portion of the rotating member. In this manner the crankcase gases may be "pumped" from the central portion of the rotating member into the interspaces between the separation discs in the stack of separation discs by the rotation of the rotating member. Thus, the centrifugal separator may work according to the concurrent flow principle, in which the gas flows in the disc stack from a radial inner part to a radial outer part, which is opposite to a separator operating according to the counter-current flow principle, in which the gas is conducted into the centrifugal rotor at the periphery of the rotor and is led towards a central part of the rotor.

The drive member may for example comprise a turbine wheel, rotated by means of an oil jet from the lubrication oil system of the combustion engine or a free jet wheel comprising a blow-back disk. However, the drive member may also be independent of the combustion engine and comprise an electrical motor, a hydraulic motor or a pneumatic motor.

Further, according to the first aspect, the at least one bearing is mounted with an axial preload in said separator. Thus, at least one bearing is arranged such that a sustained axial load, independent of external loads, is added to the bearing when mounted in the separator. The axial preload may thus ensure constant contact between essential parts of the bearing, such as between rolling elements and bearing rings.

The at least one bearing may be a rolling element bearing, such as a ball bearing or a roller bearing. The at least one rolling element bearing may comprise a stationary outer ring and a rotatable inner ring.

The at least one bearing holder is attached to the bearing, such as to the stationary portion of the bearing. The bearing holder of the at least one bearing holder is flexible when dismounted from the separator, i.e. it is a resilient bearing holder. The bearing holder may thus be resilient or flexible in the axial direction when dismounted. Further, the bearing holder is arranged in the centrifugal separator with a pre-tension to provide the axial pre-load of the bearing retained in the bearing holder. Thus, due to the "internal" flexibility of the bearing holder, it may be mounted in the centrifugal separator to provide the axial pre-load.

The flexibility of the bearing holder when dismounted may be due to its geometry.

The bearing holder may be a single piece component. However, the bearing holder may also be a part of the housing, into which the bearing has been casted or injection molded. The geometry of the part of the housing may thus be such that it applies an axial tension to the bearing when the bearing is welded into the part.

The first aspect of the invention is based on the insight that instead of using a traditional compression spring for providing the axial pre-load of the bearing or bearings, the "compression spring function" may instead be built-in in the bearing holder as such. Thus, during assembly of the centrifugal separator, the flexible bearing holder is pre-tensioned. This will thus have the same effect as if an ordinary compression spring was used in the centrifugal separator. This reduces the complexity of the centrifugal separator and thus also reduces the cost.

Consequently, in embodiments of the first aspect, the centrifugal separator is free of any compression spring member arranged for providing the preload of the at least one bearing.

In embodiments of the first aspect, the at least one bearing comprises an upper and/or lower bearing arranged axially on either side of the separation members.

Thus, one or both of the upper and lower bearings may be arranged in a flexible bearing holder. If one of the bearings are arranged in a flexible bearing holder, the other bearing may be arranged in a conventional bearing holder, and a spring member may be used to provide the pre-load to the bearing in the conventional bearing holder. As an alternative, one of the upper and lower bearings may be arranged in a flexible bearing holder as disclosed herein, whereas the other is arranged in a fixed manner.

In embodiments of the first aspect, the rotating member comprises an axial shaft that is supported by said at least one bearing. The axial shaft may thus be centred at the axis of rotation (X).

In embodiments of the first aspect, the least one bearing comprises a rotatable inner ring and a stationary outer ring, and wherein said bearing holder supports the outer ring of the bearing. Rolling elements may thus be placed between the inner and outer rings. However, as an alternative, the at least one bearing could comprise a stationary inner ring and a rotatable outer ring, and the bearing holder could then support the stationary inner ring.

In embodiments of the first aspect, the bearing holder is attached to a stationary portion of the centrifugal separator at a radially outer portion of the bearing holder. This may thus provide for mounting the bearing holder with a pre-tension.

The flexible bearing holder may be designed in a variety of ways. The flexible bearing holder may for example be made of, or comprise, a polymeric material.

According to the invention, the bearing holder comprises a central portion supporting said bearing and at least two radial spokes extending from said central portion.

The central portion may thus be a retainer for the actual bearing. The central portion may for example be in the form of a round cup or container for receiving the bearing. The central portion may thus comprise a round opening for receiving a bearing. The radial spokes may be what gives the bearing holder a flexibility when dismounted from the centrifugal separator. The radial spokes may thus have a radial length, thickness and be of a material that makes the whole bearing holder flexible in the axial direction when dismounted.

The flexible bearing holder may comprise at least four, such as at least six, such as at least eight radial spokes. The radial spokes may be equidistantly spaced around the circumference of the central portion.

According to the invention, the flexible bearing holder is arranged such that a through opening formed between said radial spokes forms part of the gas inlet or the drainage outlet. However, also part of the gas outlet could be formed by the through opening between the spokes.

Further, as an example, the bearing holder may be attached to a stationary portion of the centrifugal separator at the radially outer portions of said at least two radial spokes. The radial spokes may thus comprise a through hole at a radially outer portion for receiving fastening means, such as screws or the like, to facilitate fastening of the bearing holder to a stationary portion of the centrifugal separator. The bearing holder may thus be attached to a stationary portion only via fastening means arranged at the radial outer portions of the radial spokes. This may thus facilitate mounting the bearing holder with a pre-tension in the centrifugal separator.

As an alternative, the bearing holder may be attached to a stationary portion by welding, such as plastic against plastic welding.

Moreover, the at least two spokes of the bearing holder may be connected at a radially outer portion to form a ring structure at the radially outer portion. This outer ring may give the bearing holder further stability.

In embodiments of the first aspect, the bearing holder comprises a central portion supporting said bearing and a radial disc-shaped element extending from the central portion. Thus, the bearing holder may as an alternative comprise a radial disc-shaped element instead of the radial spokes extending from the central portion. This disc-shaped element may be of a flexible material so that the bearing in the bearing holder may be mounted with a certain pre-load. The disc-shaped element may for example be of a polymeric material. The disc-shaped element may also be a solid disc, with no through holes.

In embodiments of the first aspect, the plurality of separation members is a stack of separation discs, such as a stack of frustoconical separation discs. Such discs may have an outer radius and an inner radius, thus forming a central opening in the disc. The frustoconical separation discs may comprise a flat portion that extend perpendicularly to the axis of rotation (X), and a conical portion that extend outwardly and downwardly from the flat portion. Opening is the flat portion may for part of a central space within the centrifugal separator into which gas to be cleaned is guided from the gas inlet. Thus, gas to be cleaned may be guided into the central space and then to the interspaces formed between the discs in the disc stack. As a complement, or alternative, the central space may also be formed radially within the inner radius of the discs.

The present disclosure further relates to the flexible bearing holder as such. Thus, the present disclosure also provides a bearing holder for a rolling element bearing, said bearing holder comprising a central portion for supporting the rolling element bearing and at least two radial spokes extending from said central portion, wherein the central portion is flexible in the axial direction due to a flexibility in said at least two radial spokes.

The bearing holder may thus be as discussed in relation to the first aspect above. Consequently, the radial spokes may have a radial length, thickness and be of a material that makes the whole bearing holder flexible in the axial direction. The bearing holder may be in one-piece. Further, the bearing holder may be of a polymeric material.

As an example, the bearing holder further comprises attachment means at a radially outer portion of said at least two radial spokes. The attachment means may be in the form of through-holes in the radial spokes for receiving a fastening element, such as a screw.

### Brief description of the Drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Figure 1 shows a schematic drawing of the cross-section of an embodiment of a centrifugal separator for cleaning gas.
Figure 2 shows a close-up view of the upper bearing and bearing holder of the centrifugal separator of Fig. 1.
Figure 3 shows a perspective view of the bearing holder mounted in the centrifugal separator.
Figure 4 shows a perspective view and a top view of a flexible bearing holder.
Figure 5 shows an embodiment in which both bearings are arranged in below the separation space.

### Detailed Description

The centrifugal separator according to the present disclosure will be further illustrated by the following description with reference to the accompanying drawings.

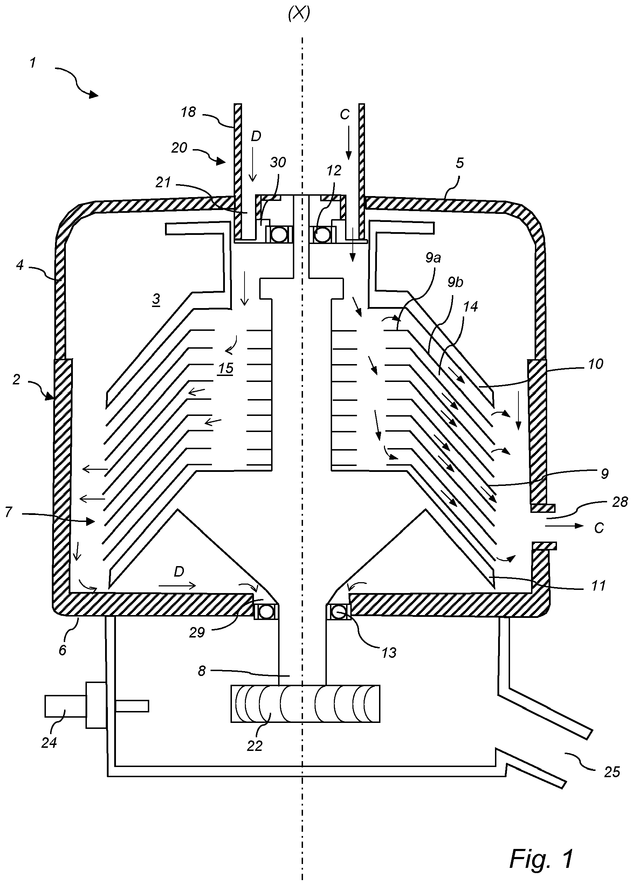

Fig. 1 shows a cross-section of a centrifugal separator 1 according to the present disclosure. The centrifugal separator 1 comprises a stationary casing 2, which is configured to be mounted to a combustion engine (not disclosed), especially a diesel engine, at a suitable position, such as on top of the combustion engine or at the side of the combustion engine.

It is to be noted that the centrifugal separator 1 is also suitable for cleaning gases from other sources than combustion engines, for instance the environment of machine tools which frequently contains large amounts of liquid contaminants in the form of oil droplets or oil mist.

The stationary casing 2 encloses a separation space 3 through which a gas flow is permitted. The stationary casing 2 comprises, or is formed by, a surrounding side wall 4, an upper end wall 5 and a lower end wall 6

The centrifugal separator comprises a rotating member 7, which is arranged to rotate around an axis (X) of rotation. It should be noted that the stationary casing 2 is stationary in relation to the rotating member 7, and preferably in relation to the combustion engine to which it may be mounted.

The stationary casing 2 has a radius from the axis (X) of rotation to the surrounding side wall 4 that is constant at least with respect to a major part of the circumference of the surrounding side wall 4. The surrounding side wall 4 thus has a circular, or substantially, circular cross-section.

The rotating member 7 comprises a rotatable shaft, i.e. spindle 8 and a stack of separation discs 9 attached to the spindle 8. All the separation discs of the stack 9 are provided between a top disc 10 and a lower end plate 11.

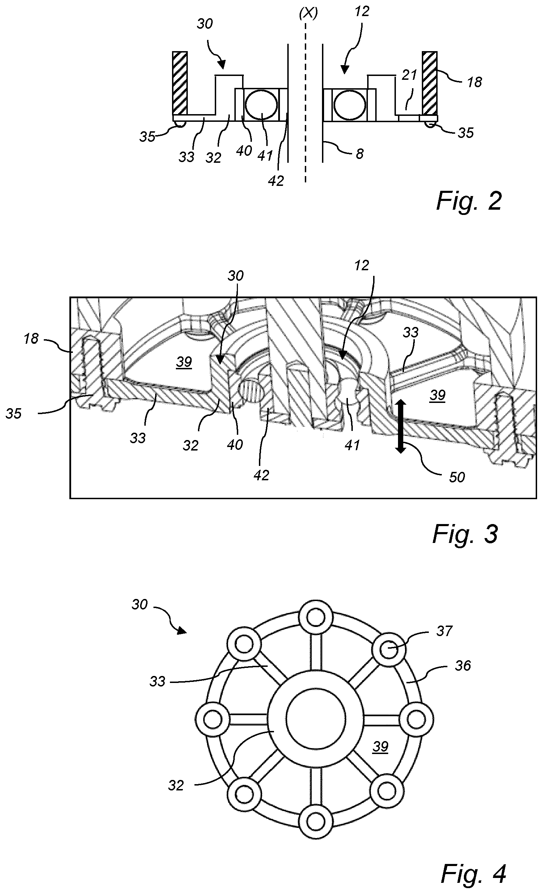

The spindle 8, and thus the rotating member 7, is rotatably supported in the stationary casing 2 by means of an upper bearing 12 and a lower bearing 13, the bearings being arranged one on each axial side of the stack of separation discs 9. The upper bearing 12 is retained in upper bearing holder 30, which will be described in more detail in relation to Figs. 2 - 4 below. The centrifugal separator 1 is free of any spring member arranged for providing the preload to the upper bearing 12. The lower bearing 13 may be mounted in a stiff configuration or stiff bearing holder.

The separation discs of the disc stack 9 are frusto-conical and extend outwardly and downwardly from the spindle 8. The separation discs thus comprise a flat portion 9a, which extend perpendicularly to the axis of rotation (X), and a conical portion 9b, that extend outwardly and downwardly from the flat portion 9a.

It should be noted that the separation discs also could extend outwardly and upwardly, or even radially.

The separation discs of the stack 9 are provided at a distance from each other by means of distance members (not disclosed) in order to form interspaces 14 between adjacent separation discs 9, i.e. an interspace 14 between each pair of adjacent separation discs 9. The axial thickness of each interspace 14 may e.g. be in the order of 0.5 -2 mm, such as 1-2 mm.

The separation discs of the stack 9 may be made of plastic or metal. The number of separation discs in the stack 9 is normally higher than indicated in Fig. 1 and may be for instance 50 to 100 separation discs 9 depending on the size of the centrifugal separator.

The centrifugal separator 1 comprises an oil nozzle 24 arranged for being connected to an engine oil circuit of an internal combustion engine. During running of the internal combustion engine, oil is pumped through the oil nozzle 24 onto a wheel 22 connected to the spindle 8 to thereby rotate the rotating member 7 and thus the stack of separation discs 9.

As an alternative, the centrifugal separator 1 may comprise an electric motor arranged to rotate the spindle 8 and rotating member 7. As a further alternative, the centrifugal separator 3 may comprise a turbine wheel connected to the spindle 8, where the turbine wheel is arranged to be driven by exhaust gases from the internal combustion engine to rotate the spindle 8 and the rotating member 7. The rotating member 7 may also be arranged for being rotated by a mechanical drive unit. Thus, the centrifugal separator may comprise a mechanical drive unit for rotating the rotating member.

The rotating member 7 defines a central space 15. The central space 15 is formed by a through hole in each of the separation discs 9. In the embodiments of Fig. 1, the central space 15 is formed by a plurality of through holes, each extending through the top disc 10 and through each of the separation discs 9, but not through the lower end plate 11. The through holes are arranged in the flat portions 9a of the separation discs.

The gas inlet 20 is for the supply of the gas to be cleaned. The gas inlet 20 extends through the stationary casing 2, and more precisely through upper end wall 5. The gas inlet 20 is formed by the axially extending inlet conduit 18, which forms an upstream portion, and through channels 21 that form a downstream portion of the inlet 20. The through channels 21 are arranged radially outside the upper bearing 12, through which the inlet conduit 18 communicates with central space 15.

The gas inlet 20 communicates with the central space 15 so that the gas to be cleaned is conveyed from the inlet 20 via the central space 15 to the interspaces 14 of the stack of separation discs 9. The gas inlet 20 is configured to communicate with the crankcase of the combustion engine, or any other source, via the inlet conduit 18 permitting the supply of crankcase gas from the crankcase to the gas inlet 20 and further to the central space 15 and the interspaces 14 as explained above.

The centrifugal separator 1 comprises a drainage outlet 29 arranged in the lower portion of the stationary casing 2 and configured to permit discharge of liquid contaminants separated from the gas. The drainage outlet 29 is in this embodiment in the form of through holes arranged in the lower end wall 6 so that separated liquid contaminants flow through the lower bearing 13 as they are drained from the separation space 3. The separated oil, and other particles and/or substances, is led to an oil outlet 25 of the centrifugal separator 1, which together with oil from the oil nozzle 24 used to drive the wheel 22, may be led back to the engine oil circuit of an internal combustion engine.

The gas outlet 28 of the centrifugal separator 1 is arranged in the lower portion of the stationary casing 2 and is configured to permit discharge of cleaned gas. The gas outlet 28 comprises an outlet conduit through the surrounding side wall 4 of the stationary casing 2. The gas outlet 28 is in this embodiment arranged in the lower portion of the surrounding side wall 4, but the gas outlet 28 could also be arranged in an upper portion of the stationary casing 2, such as in the upper end wall 5.

During operation of the centrifugal separator as shown in Fig. 1, the rotating member 7 is kept in rotation by the oil nozzle 24 supplying oil against the wheel 22. As an example, the rotational speed may be in the range of 7.500-12.000 rpm.

Contaminated gas, e.g. crankcase gas from the crankcase of an internal combustion engine, is supplied to the gas inlet 20 via conduit 18. This gas is conducted further into the central space 15 and from there into and through the interspaces 14 between the separation discs of the stack 9. As a consequence of the rotation of the rotating member 7 the gas is brought to rotate, whereby it is pumped further on radially outwardly through gaps or interspaces 14.

During the rotation of the gas in the interspaces 14, solid or liquid particles such as oil suspended in the gas are separated therefrom. The particles settle on the insides of the conical portions 9b of the separation discs and slide or run after that radially outwardly thereon. When the particles and/or liquid drops have reached out to the radial outer edges of the separation discs 9, they are thrown away from the rotating member 7 and hit the inner surface 4a of the surrounding side wall 4. Separated oil particles may form a film on the inner surface of the stationary casing 2. From there, oil may be pulled by gravity downwardly to bottom end wall 6 and then and leave the separation space 3 through the drainage outlet 29. For this, the inner wall of the bottom end wall may be tilted radially inwards, so that oil leaving the surrounding inner wall of the stationary casing 2 may be pulled by gravity towards drainage outlet 29. The path of the contaminants in the gas is schematically illustrated by arrows "D" in Fig. 1.

Cleaned gas freed from particles and exiting from the stack of separation discs 9 leaves the stationary casing 2 through the gas outlet 28. The path of the gas through the centrifugal separator 1 is schematically shown by arrows "C" in Fig. 1.

In the embodiment shown in Fig. 1, the bearings 12,13 are arranged on either sides of the stack of separation discs 9. However, both bearing could for example both be arranged axially below or above the stack of separation discs.

Fig. 2 shows a close-up view of the upper bearing 12 retained in the upper bearing holder 30. It should be understood that the bearing holder 30 described in relation to Fig. 2 may as well be the arrangement of a bearing holder arranged for the lower bearing if the arrangement in the centrifugal separator 1 was different.

The upper bearing 12 is a rolling element bearing comprising a rotatable inner ring 42 and a stationary outer ring 40. In between are rolling elements 41 arranged. The upper bearing 12 is retained in the bearing holder 30, and the rotating member 7 of the centrifugal separator 1 is thereby journaled in the stationary casing 2 via the upper bearing 12.

The bearing holder 30 comprises a central portion 32 which supports the outer, stationary ring 40 of the bearing 12. The central portion 32 may be annular around the axis of rotation (X) and form a container into which the bearing 12 may be arranged. A plurality of radial spokes 33 extends radially outwards from the central portion 32. Th bearing holder is attached to a stationary portion of the centrifugal separator 1, such as to the stationary casing 2, via the radial spokes 33. In this example, the upper bearing holder 30 is attached via the spokes 33 to a lower portion of the stationary inlet pipe 18, which forms part of the upper end wall 5 of the stationary casing 2. Attachment of the spokes 33 to the stationary portion is performed using attachment members 35 in the form of screws.

Due to the spokes 33, the upper bearing holder 30 is flexible in the axial direction when it is dismounted form the centrifugal separator. When arranged in the centrifugal separator 1, the upper bearing holder 30 is mounted with a pre-tension to provide an axial preload to the upper bearing 12 in the centrifugal separator 1. This may thus be achieved by flexing the bearing holder 30 in the axial direction and mount the bearing holder to a stationary portion in a slightly flexed state.

Fig. 3 shows a perspective view of a section of a bearing holder 30 and upper bearing 12 mounted in the centrifugal separator 1. As seen more clearly in Fig. 3, the bearing holder 30 is attached to a stationary portion 18 of the centrifugal separator at a radially outer portion by means of screws 35. The bearing holder 30 comprises in this example eight radial spokes 33, which form through openings 39. When retaining the upper bearing 12, the though openings 39 may form part of the through channels 21, through which the inlet conduit 18 communicates with central space 15. Due to the radial spokes 33, the bearing holder 30 is flexible in the axial direction when dismounted from the centrifugal separator 1, as illustrated by arrows 50 in Fig. 3. Upon mounting, the bearing holder 30 may be flexed so as to provide an axial upward force to the bearing 12.

Fig. 4 shows a top view of an example of a bearing holder 30 when dismounted from the centrifugal separator 1. The bearing holder 30 comprises a central portion 32 arranged for supporting a bearing and in this example eight radial spokes 33 extending from the central portion 32. The radial spokes 33 are connected at a radially outer portion to form an annular ring structure 36 at the radially outer portion. As discussed above, the central portion 32 for holding the bearing is flexible in the axial direction due to a flexibility in the radial spokes 33. The axial direction is thus in the direction of the rotational axis of a bearing that is inserted in the central portion 32 of the bearing holder 30. The bearing holder 30 further comprises attachment means 37 at a radially outer portion of the radial spokes 33. The attachment means 37 are in the form of through holes arranged for receiving fastening means, such as a screw.

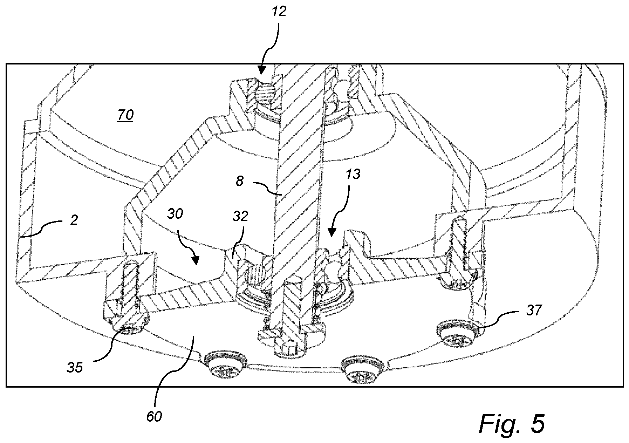

Fig. 5 further shows an example in which both upper 12 and lower 13 bearing s are arranged in a lower portion of the centrifugal separator. In this example, both bearings 12, 13 are arranged axially below the separation space in a separate chamber 70 of the housing 2. Thus, both bearings 12, 13 are arranged at a lower portion of the spindle 8. In this example, the lower bearing 13 is arranged in a bearing holder of the present disclosure, whereas the upper bearing 12 is arranged in a stiff manner without pre-load. Further, the bearing holder 30 for the lower bearing 13 comprises a central portion 32, but instead of any spokes, there is a radial disc element 60 extending radially outwards from the central portion. Due to the geometry of the disc element 60, the bearing holder 30 is flexible in the axial direction when dismounted form the centrifugal separator. Further, the bearing holder 30 is attached to a portion of the housing 2 at radially outer positions, in this case via screw members 35 extending through attachment means, i.e. the through holes 37, of the radial disc element 60.

The invention is not limited to the embodiment disclosed but may be varied and modified within the scope of the claims set out below. The invention is not limited to the orientation of the axis of rotation (X) disclosed in the figures. The term "centrifugal separator" also comprises centrifugal separators with a substantially horizontally oriented axis of rotation. In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A centrifugal separator (1) for cleaning gas containing contaminants comprising
a stationary casing (2), enclosing a separation space (3) through which a gas flow is permitted,
a gas inlet (20) extending through the stationary casing (2) and permitting supply of the gas to be cleaned,
a rotating member (7) comprising a plurality of separation members (9) arranged in said separation space (3) and being arranged to rotate around an axis (X) of rotation, said rotating member (7) being journaled within the stationary casing (2) via at least one bearing (12) retained in a bearing holder (30);
a gas outlet (28) arranged in the stationary casing (2) and configured to permit discharge of cleaned gas and comprising an outlet opening through a wall of the stationary casing (2),
a drainage outlet (29) arranged in the stationary casing (2) and configured to permit discharge of liquid contaminants separated from the gas to be cleaned;
a drive member (22) for rotating the rotating member (7);
wherein said at least one bearing (12) is mounted with an axial preload in said centrifugal separator (1), and
**characterized in that** said at least one bearing holder (30) is flexible when dismounted from said centrifugal separator (1) and arranged in said centrifugal separator(1) with a pre-tension to provide said axial preload of the at least one bearing (12),
wherein said bearing holder (30) comprises a central portion (32) supporting said bearing (12) and at least two radial spokes (33) extending from said central portion (32), and
wherein a through opening (39) formed between said radial spokes (33) forms part of the gas inlet or the drainage outlet.

2. A centrifugal separator (1) according to claim 1, wherein the centrifugal separator (1) is free of any compression spring member arranged for providing said preload of said at least one bearing (12).

3. A centrifugal separator (1) according to claim 1 or 2, wherein said at least one bearing (12) comprises an upper and/or lower bearing arranged axially on either side of the separation members (9).

4. A centrifugal separator (1) according to any previous claim, wherein said rotating member (7) comprises an axial shaft (8) that is supported by said at least one bearing (12).

5. A centrifugal separator (1) according to any previous claim, wherein said at least one bearing (12) comprises a rotatable inner ring (42) and a stationary outer ring (40), and wherein said bearing holder (30) supports the outer ring (40) of the bearing (12).

6. A centrifugal separator (1) according to any previous claim, wherein said bearing holder (30) is attached to a stationary portion (18) of the centrifugal separator (1) at a radially outer portion of the bearing holder (30).

7. A centrifugal separator (1) according to any previous claim, wherein said bearing holder (30) is attached to a stationary portion (18) of the centrifugal separator (1) at the radially outer portions of said at least two radial spokes (33).

8. A centrifugal separator (1) according to claim 7, wherein said at least two spokes (33) are connected at a radially outer portion to form a ring structure (36) at the radially outer portion.

9. A centrifugal separator (1) according to any previous claim, wherein the plurality of separation members (9) is a stack of separation discs.

## Patentansprüche

1. Zentrifugalabscheider (1) zum Reinigen von Gas enthaltenden Verunreinigungen, umfassend
ein feststehendes Gehäuse (2), das einen Abscheideraum (3) umschließt, durch den ein Gasstrom zugelassen wird,
einen Gaseinlass (20), der sich durch das feststehende Gehäuse (2) erstreckt und eine Zufuhr des zu reinigenden Gases zulässt,
ein sich drehendes Element (7), umfassend eine Vielzahl von Abscheideelementen (9), die in dem Abscheideraum (3) angeordnet sind und derart angeordnet sind, dass sie sich um eine Rotationsachse (X) drehen, wobei das sich drehende Element (7) innerhalb des feststehenden Gehäuses (2) über mindestens ein Lager (12), das in einer Lagerhalterung (30) zurückgehalten wird, gelagert ist,
einen Gasauslass (28), der in dem feststehenden Gehäuse (2) angeordnet und dafür konfiguriert ist, eine Abgabe von gereinigtem Gas zuzulassen, und eine Auslassöffnung durch eine Wand des feststehenden Gehäuses (2) umfasst,
einen Drainageauslass (29), der in dem feststehenden Gehäuse (2) angeordnet und dafür konfiguriert ist, eine Abgabe von flüssigen Verunreinigungen zuzulassen, die von dem zu reinigenden Gas abgeschieden werden;
ein Antriebselement (22) zum Drehen des sich drehenden Elements (7);
wobei das mindestens eine Lager (12) mit einer axialen Vorlast in dem Zentrifugalabscheider (1) montiert ist, und
**dadurch gekennzeichnet, dass** die mindestens eine Lagerhalterung (30) flexibel ist, wenn sie von dem Zentrifugalabscheider (1) abmontiert wird, und in dem Zentrifugalabscheider (1) mit einer Vorspannung angeordnet ist, um die axiale Vorlast des mindestens einen Lagers (12) bereitzustellen,
wobei die Lagerhalterung (30) einen mittleren Abschnitt (32), der das Lager (12) trägt, und mindestens zwei radiale Speichen (33) umfasst, die sich von dem mittleren Abschnitt (32) erstrecken, und
wobei eine zwischen den radialen Speichen (33) gebildete Durchgangsöffnung (39) einen Teil des Gaseinlasses oder des Drainageauslasses bildet.

2. Zentrifugalabscheider (1) nach Anspruch 1, wobei der Zentrifugalabscheider (1) frei von jeglichem Druckfederelement ist, das angeordnet ist, um die Vorlast des mindestens einen Lagers (12) bereitzustellen.

3. Zentrifugalabscheider (1) nach Anspruch 1 oder 2, wobei das mindestens eine Lager (12) ein oberes und/oder ein unteres Lager umfasst, das axial auf jeder Seite der Abscheideelemente (9) angeordnet ist.

4. Zentrifugalabscheider (1) nach einem der vorhergehenden Ansprüche, wobei das sich drehende Element (7) eine Axialwelle (8) umfasst, die von dem mindestens einen Lager (12) getragen wird.

5. Zentrifugalabscheider (1) nach einem der vorhergehenden Ansprüche, wobei das mindestens eine Lager (12) einen drehbaren Innenring (42) und einen feststehenden Außenring (40) umfasst, und wobei die Lagerhalterung (30) den Außenring (40) des Lagers (12) trägt.

6. Zentrifugalabscheider (1) nach einem der vorhergehenden Ansprüche, wobei die Lagerhalterung (30) an einem feststehenden Abschnitt (18) des Zentrifugalabscheiders (1) an einem radial äußeren Abschnitt der Lagerhalterung (30) angebracht ist.

7. Zentrifugalabscheider (1) nach einem der vorhergehenden Ansprüche, wobei die Lagerhalterung (30) an einem feststehenden Abschnitt (18) des Zentrifugalabscheiders (1) an den radial äußeren Abschnitten der mindestens zwei radialen Speichen (33) angebracht ist.

8. Zentrifugalabscheider (1) nach Anspruch 7, wobei die mindestens zwei Speichen (33) mit einem radial äußeren Abschnitt verbunden sind, um eine Ringstruktur (36) an dem radial äußeren Abschnitt zu bilden.

9. Zentrifugalabscheider (1) nach einem der vorhergehenden Ansprüche, wobei es sich bei der Vielzahl von Abscheideelementen (9) um einen Stapel von Abscheideplatten handelt.

## Revendications

1. Séparateur centrifuge (1) pour épurer un gaz contenant des contaminants, comprenant
un carter fixe (2) renfermant un espace de séparation (3) à travers lequel un écoulement de gaz est permis,
une entrée de gaz (20) s'étendant à travers le carter fixe (2) et permettant une alimentation du gaz à épurer,
un élément rotatif (7) comprenant une pluralité d'éléments de séparation (9) agencés dans ledit espace de séparation (3) et étant agencés pour tourner autour d'un axe (X) de rotation, ledit élément rotatif (7) étant porté à l'intérieur du carter fixe (2) *via* au moins un palier (12) retenu dans un support de palier (30) ;
une sortie de gaz (28) agencée dans le carter fixe (2) et configurée pour permettre une évacuation de gaz épuré et comprenant un orifice de sortie à travers une paroi du carter fixe (2),
une sortie de drainage (29) agencée dans le carter fixe (2) et configurée pour permettre une évacuation de contaminants liquides séparés du gaz à épurer ;
un élément d'entraînement (22) pour faire tourner l'élément rotatif (7) ;
dans lequel ledit au moins un palier (12) est monté avec une pré-charge axiale dans ledit séparateur centrifuge (1), et
**caractérisé en ce que** ledit au moins un support de palier (30) est flexible lorsqu'il est démonté dudit séparateur centrifuge (1) et agencé dans ledit séparateur centrifuge (1) avec une pré-tension pour fournir ladite pré-charge axiale de l'au moins un palier (12),
dans lequel ledit support de palier (30) comprend une partie centrale (32) supportant ledit palier (12) et au moins deux rayons radiaux (33) s'étendant à partir de ladite partie centrale (32), et
dans lequel un orifice traversant (39) formé entre lesdits rayons radiaux (33) forme une partie de l'entrée de gaz ou de la sortie de drainage.

2. Séparateur centrifuge (1) selon la revendication 1, dans lequel le séparateur centrifuge (1) ne contient aucun élément de ressort de compression agencé pour fournir ladite pré-charge dudit au moins un palier (12).

3. Séparateur centrifuge (1) selon la revendication 1 ou 2, dans lequel ledit au moins un palier (12) comprend un palier supérieur et/ou inférieur agencé axialement de chaque côté des éléments de séparation (9).

4. Séparateur centrifuge (1) selon l'une quelconque des revendications précédentes, dans lequel ledit élément rotatif (7) comprend un arbre axial (8) qui est supporté par ledit au moins un palier (12).

5. Séparateur centrifuge (1) selon l'une quelconque des revendications précédentes, dans lequel ledit au moins un palier (12) comprend une bague intérieure tournante (42) et une bague extérieure fixe (40), et dans lequel ledit support de palier (30) supporte la bague extérieure (40) du palier (12).

6. Séparateur centrifuge (1) selon l'une quelconque des revendications précédentes, dans lequel ledit support de palier (30) est fixé à une partie fixe (18) du séparateur centrifuge (1) au niveau d'une partie radialement extérieure du support de palier (30).

7. Séparateur centrifuge (1) selon l'une quelconque des revendications précédentes, dans lequel ledit support de palier (30) est fixé à une partie fixe (18) du séparateur centrifuge (1) au niveau des parties radialement extérieures desdits au moins deux rayons radiaux (33).

8. Séparateur centrifuge (1) selon la revendication 7, dans lequel lesdits au moins deux rayons (33) sont connectés au niveau d'une partie radialement extérieure pour former une structure annulaire (36) au niveau de la partie radialement extérieure.

9. Séparateur centrifuge (1) selon l'une quelconque des revendications précédentes, dans lequel la pluralité d'éléments de séparation (9) est un empilement de disques de séparation.
